# NEUE EUROPÄISCHE PATENTSCHRIFT

(11) **EP 0 527 362 B2**
(45) Veröffentlichungstag und Bekanntmachung des Hinweises auf die Entscheidung über den Einspruch: **15.11.2000**
(45) Hinweis auf die Patenterteilung: 06.09.1995
(21) Anmeldenummer: 92112485.5
(22) Anmeldetag: 21.07.1992
(51) Int. Cl.: F02B 47/04, F02M 43/00

(54) **Verfahren und Vorrichtung zur Verminderung des Stickoxidausstosses von Verbrennungsmotoren**
Method and device for reducing nitrogen oxide emissions from internal combustion engines
Procédé et dispositif pour diminuer les oxides azotiques expulsés par des moteurs à combustion interne

(30) Priorität: 13.08.1991 DE 4126705
(43) Veröffentlichungstag der Anmeldung: 17.02.1993
(73) Patentinhaber: MAN B & W Diesel Aktiengesellschaft, 86135 Augsburg (DE)
(72) Erfinder: Lausch, Wolfram, Dr., W-8900 Augsburg (DE); Maier, Ludwig, W-8901 Diedorf (DE)

(56) Entgegenhaltungen:
- EP-A- 0 459 083
- GB-A- 2 130 650
- US-A- 3 834 359
- US-A- 4 403 473
- US-A- 4 425 937
- PATENT ABSTRACTS OF JAPAN vol. 14, no. 121 (M-946)7. März 1990 & JP-A-13 18 716
- PATENT ABSTRACTS OF JAPAN vol. 12, no. 392 (M-755)19. Oktober 1988 & JP-A-63 140 862

## Beschreibung

Die Erfindung betrifft ein Verfahren gemäß Oberbegriff des Anspruchs 1 und eine Vorrichtung zur Durchführung des Verfahrens, gemäß Oberbegriff des Anspruchs 5.

Bei einem bekannten Verfahren gattungsgemäßer Art reagieren die im Abgas enthaltenen Stickoxide und das Reduktionsmittel in einem dem Motor nachgeordneten Katalysator, der mit dem Reduktionsmittel und den Abgasen beaufschlagt wird. Der für dieses bekannte Verfahren (SCR = Selective Catalytic Reduction) benötigte Katalysator erfordert nicht nur einen hohen Bereitstellungsaufwand, sondern auch einen hohen Platzbedarf, da SCR-Katalysatoren für überstöchiometrisch betriebene Brennkraftmaschinen wesentlich größer sind, als die beispielsweise bei Otto-Motoren Verwendung findenden Dreiwege-Katalysatoren. Zudem ergibt sich auch ein erhöhter Wartungsaufwand. In diesem Zusammenhang ist davon auszugehen, daß die insbesondere bei Dieselmotoren im Abgas enthaltenen Partikel zu einer Verschmutzung des Katalysators führen. Die Folge davon ist eine eingeschränkte Wirksamkeit, wenn nicht kurze Reinigungsintervalle eingehalten werden. Abgesehen davon ist die Lebensdauer von SCR-Katalysatoren sehr begrenzt. Hinzu kommt, daß der SCR-Katalysator eine vergleichsweise hohe Temperatur von 280° bis 350° C erfordert, um ausreichend hohe Stickoxid-Umsatzraten zu erreichen. Dadurch ergeben sich aber bei jedem Motorstart relativ lange Betriebszeiten ohne bzw. mit eingeschränkter Stickoxid-Verminderung, wenn nicht eine zusätzliche Stillstandsheizung vorgesehen ist, die jedoch einen zusätzlichen, hohen Energiebedarf ergibt. Ein weiterer Nachteil ist darin zu sehen, daß das aus dem Katalysator und der Dosierung des Reduktionsmittels bestehende System bei Laständerungen, also bei Änderungen des Stickoxid- bzw. Abgasmassenstroms, nur relativ träge reagiert, was im Falle solcher Änderungen entweder zu einer zeitweise erhöhten Stickoxid-Restemission bzw. zu einem erhöhten Reduktionsmittelgehalt im Abgas führt. Nachteilig ist zudem, daß der Katalysator einen nicht unerheblichen Strömungswiderstand darstellt, der den Betrieb eines dem Motor nachgeschalteten Abgasturboladers beeinträchtigen kann. Dies gilt insbesondere bei Zweitaktmotoren, bei denen der Katalysator wegen der benötigten hohen Temperatur dem Abgasturbolader vorgeordnet sein muß. Um hier einen stabilen Betrieb des Abgasturboladers zu ermöglichen, ist es vielfach erforderlich ein Hilfsgebläse vorzusehen, das Schwankungen im Luftdurchsatz ausgleicht. Ein derartiges Hilfsgebläse ist aber ebenfalls mit einem hohen Bereitstellungs- und Betriebsaufwand verbunden.

Aus der DE-A 27 42 609 ist es zwar bekannt, zur Verminderung der Stickoxidbildung in den Brennraum ein weiteres CₙHₙ-Gemenge, vorzugsweise in Form normalen Brennstoffs, einzuspritzen. Diese Einspritzung soll erfolgen, wenn der Brennvorgang bereits voll eingesetzt hat. Hierbei handelt es sich dementsprechend um ein Nachspritzen von Brennstoff in den eigentlichen Brennvorgang hinein. Hierdurch soll der freie Sauerstoff gebunden werden, bevor er mit Stickstoff zu Stickoxid reagieren kann. Bei diesem bekannten Verfahren geht es dementsprechend im Gegensatz zum gattungsgemäßen Stand der Technik, bei dem die bei der Verbrennung entstehenden Stickoxide nachträglich reduziert werden, darum, die Bildung von Stickoxiden von Anfang an zu verhindern. Es ist jedoch davon auszugehen, daß die hierbei erzielbare Wirkung nur sehr gering ist, weil der bei der Verbrennung entstehende Stickstoff bei der Bindung von Sauerstoff gegenüber dem nachträglich eingespritzten Brennstoff im Vorteil ist. Zudem ist davon auszugehen, daß jedenfalls ein Teil des in voll einsetzenden Brennvorgang nachgespritzten Brennstoffs verbrennt und dementsprechend für die erwünschte Reaktion nicht zur Verfügung steht. Aus der DE-A 27 42 609 konnte daher kein brauchbarer Hinweis zur Vermeidung der Nachteile des gattungsgemäßen Standes der Technik entnommen werden.

Die JP-A-1 318 716, die den nächstkommenden Stand der Technik bildet, zeigt einen Verbrennungsmotor der Art, von dem die vorliegende Erfindung ausgeht und bei dem Ammoniak zur NOx-Reduktion vor dem Öffnen des Auslaßventils in den Brennraum eingespritzt wird. Das heißt, um die NOx-Emission zu verringern, wird dort vorgeschlagen, den Einspritzbeginn 5° - 10° KW vor Öffnung des Auslaßventils zu legen. Zu diesem Zeitpunkt ist allerdings ein zufriedenstellender Ablauf der Reaktion des eingespritzten Reduktionsmittels mit NOx nicht mehr möglich, da der Brennraum zu kalt ist.

Weiterhin ist aus der US-A-44 03 473 bekannt, einer Einspritzeinrichtung für Reduktionsmittel eine Reglereinrichtung zuzuordnen, mittels der die Einspritzmenge in Abhängigkeit einer Betriebsgröße veränderbar ist.

Der Erfindung liegt die Aufgabe zugrunde, ein Verfahren und eine Vorrichtung zur Verminderung des Stickoxidausstoßes von Verbrennungsmotoren mit einfachen und kostengünstigen Mitteln so zu verbessern, daß eine wirksame Reduzierung der Emission von bei der Verbrennung entstehenden Stickoxiden erreicht wird.

Diese Aufgabe wird bei einer gattungsgemäßen Einrichtung verfahrensgemäß durch die Merkmale des Anspruchs 1 gelöst.

Durch die Einspritzung des Reduktionsmittels in den Brennraum nachdem die Verbrennung ihren Höhepunkt bereits überschritten hat, läuft die Reaktion des Reduktionsmittels mit den Stickoxiden, wie Versuche ergeben haben, in vorteilhafter Weise auch ohne die Verwendung eines Katalysators ab. Mit den erfindungsgemäßen Maßnahmen werden die Nachteile des gattungsgemäßen Standes der Technik vollständig vermieden. Infolge der direkten Einspritzung des Reduktionsmittels in den Brennraum entfallen der bisher vom Katalysator verursachte Herstellungs- und Wartungsaufwand, ebenso der vom Katalysator verursachte Platzbedarf und der vom Katalysator verursachte Strömungswiderstand. Infolge des Wegfalls des vom Katalysator verursachten Strömungswiderstands ist sichergestellt, daß auch in jedem Falle ein stabiler Betrieb eines dem Motor nachgeschalteten Abgasturboladers gewährleistet ist. Infolge der direkten Einspritzung des Reduktionsmittels in den Brennraum ist zudem sichergestellt, daß auch über lange Betriebszeiten hinweg eine gleich hohe Wirksamkeit vorliegt. Ein weiterer, ganz besonderer Vorteil der erfindungsgemäßen Maßnahme ist darin zu sehen, daß auch beim Start des Motors von Anfang an eine volle Wirksamkeit gegeben ist, ohne daß eine Stillstandsheizung benötigt wird. Zudem stellen die erfindungsgemäßen Maßnahmen sicher, daß eine Änderung der Einspritzmenge des Reduktionsmittels sofort wirksam wird, was eine Regelung der Einspritzmenge in Abhängigkeit von der Last bzw. der Drehzahl ermöglicht.

Das Reduktionsmittel wird unabhängig vom Brennstoff eingespritzt, was eine einfache Optimierung des Beginns der Einspritzung des Reduktionsmittels ermöglicht.

Das Reduktionsmittel wird in die ausklingende Verbrennung eingespritzt, wozu die Einspritzung des Reduktonsmittels frühestens bei einem Kurbelwinkel von 35°, vorzugsweise 40°, nach Zünd-OT beginnt. Durch diese Maßnahmen wird zuverlässig sichergestellt, daß das Reduktionsmittel einerseits nicht mehr verbrennt, andererseits aber genügend Zeit hat, um in erwünschter Weise mit den Stickoxiden zu reagieren.

Neben der bereits vorstehend zitierten verfahrensgemäßen Lösung wird die Aufgabe der Erfindung auch vorrichtungsgemäß durch die Merkmale des Anspruchs 5 gelöst.

Diese Maßnahmen ergeben eine robuste und dementsprechend störungssichere Anordung mit geringem Platz- und Energiebedarf. In vorteilhafter Weise kann beim Aufbau der Einspritzeinrichtung auf die bewährte Konstruktion von Brennstoffeinspritzeinrichtungen zurückgegriffen werden. Es sind daher eine hohe Leistungsfähigkeit und Lebensdauer bei kostengünstigem Aufbau sichergestellt.

Vorteilhafte Weiterbildungen und zweckmäßige Ausgestaltungen der übergeordneten Vorrichtungsmaßnahmen sind in den Unteransprüchen angegeben. So kann die Druckerzeugungseinrichtung zweckmäßig als Einspritzpumpe ausgebildet sein, was einen besonders einfachen und kostengünstigen Aufbau ergibt und eine besonders hohe Robustheit gewährleistet.

In weiterer Fortbildung der übergeordneten Maßnahmen kann jede Einspritzdüse als Mehrlochdüse ausgebildet sein. Dies ergibt eine gute Verteilung des eingespritzten Reduktionsmittels auf den gesamten, hiervon zu beaufschlagenden Brennraum.

Weitere zweckmäßige Ausgestaltungen und vorteilhafte Weiterbildungen der übergeordneten Maßnahmen ergeben sich aus der nachstenden Beschreibung eines Ausführungsbeispiels anhand der Zeichnung in Verbindung mit den restlichen Unteransprüchen.

In der nachstehend beschriebenen Zeichnung zeigen:
- Figur 1: einen Schnitt durch einen Dieselmotor mit einer erfindungsgemäßen Einrichtung zur Reduktionsmitteleinspritzung und
- Figur 2: einen Schnitt durch eine Doppeleinspritzdüse für Brennstoff und Reduktionsmittel.

Der grundsätzliche Aufbau und die Wirkungsweise eines Dieselmotors sind an sich bekannt und bedürfen daher im vorliegenden Zusammenhang keiner eingehenderen Erläuterung mehr.

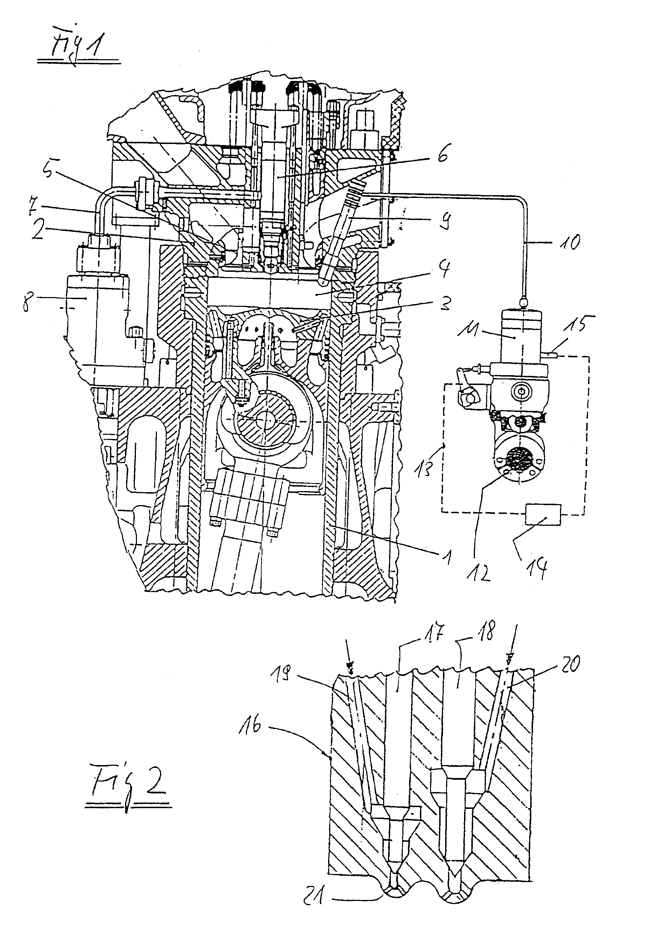

Dieselmotoren der der Figur 1 zugrundeliegenden Art enthalten normalerweise mehrere, nebeneinander angeordnete Zylinder 1, die jeweils durch einen aufgesetzten Zylinderdeckel 2 verschlossen sind. In jedem Zylinder 1 ist ein mit einer Kurbelwelle zusammenwirkender, im Betrieb auf- und abgehender Kolben 3 angeordnet, der die bewegliche Begrenzung eines mit Brennstoff beaufschlagbaren Brennraums 4 bildet. Im Zylinderdeckel 2 sind Ein- und Auslaßventile 5 für die Luft und das Abgas sowie eine Einspritzdüse 6 zum Einspritzen des Brennstoffs vorgesehen. Die Einspritzdüse 6 ist über eine Hochdruckleitung 7 mit einer Brennstoffeinspritzpumpe 8 verbunden. Die Einspritzung des Brennstoffs erfolgt, nachdem der Kolben 3 die Zufuhr angesaugte Luft verdichtet hat.

Dieselmotoren hier vorliegender Art werden mit Luftüberschuß betrieben (Lambda > 1), so daß sich eine überstöchiometrische Verbrennung mit einem hohen Anfall an Stickoxiden (NOₓ) ergibt. Um bei derartigen Motoren dennoch die Emission von Stickoxiden zu verringern, wird das bei der Verbrennung entstehende Abgas zur Reaktion mit einem Reduktionsmittel gebracht. Als Reduktionsmittel eignen sich Ammoniak und/oder Harnstoff oder ähnliche, nicht kohlenwasserstoffhaltige Stoffe. Bei der Reaktion des Reduktionsmittels mit dem im Abgas enthaltenen Stickoxiden entstehen Stickstoff und Wasser in Form von Wasserdampf und damit ungefährliche Stoffe.

Die Reaktion des Reduktionsmittels mit den Stickoxiden findet beim vorliegenden Motor im Brennraum 4 statt. Hierzu wird das Reduktionsmittel in den Brennraum eingespritzt. Dementsprechend ist neben der Brennstoff-Einspritzeinrichtung eine zweite Einspritzeinrichtung für das Reduktionsmittel vorgesehen. Diese beiden Einspritzeinrichtungen sind unabhängig voneinander betreibbar, so daß Brennstoff und Reduktionsmittel unabhängig voneinander eingespritzt werden können. Um das Reduktionsmittel einspritzen zu können, findet dieses in Form einer Lösung, zweckmäßig in Form einer wässrigen Lösung, Verwendung. Zur Verhinderung eines sogenannten Fressens des Kolbens 3 und/oder von Korrosion können dem Reduktionsmittel geeignete Additivs beigegeben werden.

Die Reduktionsmittel-Einspritzeinrichtung besteht hier aus einer im Bereich des Zylinderdeckels 2 angeordneten Einspritzdüse 9, die über eine Hochdruckleitung 10 mit einer Einspritzpumpe 11 verbunden ist. Es wäre selbstverständlich denkbar, anstelle einer Einspritzdüse mehrere, vorzugsweise gleichmäßig gegeneinander versetzte Einspritzdüsen vorzusehen. Die Einspritzpumpe 11 für Reduktionsmittel kann hinsichtlich ihres Aufbaus und ihrer Wirkungsweise von der an sich bekannten Bauart von Brennstoff-Einspritzpumpen abgeleitet sein. Die Einspritzpumpe 11 für Reduktionsmittel kann an das Motorgehäuse angebaut und mittels einer von der Kurbelwelle des Motors aus antreibbaren Nockenwelle 12 antreibbar sein, die sich über mehrere, nebeneinander angeordnete Einspritzpumpen 11 erstrecken kann. Anstelle einer Einspritzpumpe wäre es aber auch beispielsweise möglich, das Reduktionsmittel in einen Druckbehälter zu fördern und die Einspritzung über elektrisch oder hydraulisch gesteuerte Ventile zu bewerkstelligen. In jedem Falle wird das Reduktionsmittel mit einem solchen Druck eingespritzt, daß im Brennraum 4 eine Zerstäubung und damit günstige Reaktionsverhältnisse erreicht werden.

Da das Reduktionsmittel mit den bei der Verbrennung entstandenen Stickoxiden reagieren soll, wird das Reduktionsmittel erst eingespritzt, wenn die Verbrennung jedenfalls ihren Höhepunkt bereits überschritten hat. Im dargestellten Ausführungsbeispiel soll das Reduktionsmittel erst eingespritzt werden, wenn die Verbrennung bereits ausklingt und damit im wesentlichen bereits abgeschlossen ist. Dies ist bei den meisten Dieselmotoren hier vorliegenden Art ab einem Kurbelwinkel von 35°-40° nach Zünd-OT der Fall. Um das eingespritzte Reduktionsmittel möglichst mit dem gesamten Abgas zur Reaktion zu bringen, wird das Reduktionsmittel, wie oben schon erwähnt, zerstäubt und möglichst gleichmäßig auf das gesamte, bei der Einspritzung vorhandene Brennraumvolumen verteilt. Die Einspritzdüse 9 ist dementsprechend als Mehrlochdüse ausgebildet, so daß mehrere Einspritzstrahlen erzeugt werden. Deren Strahllage ist so gelegt, daß das vorhandene Brennraumvolumen vollständig erfaßt wird.

Die erforderliche Reduktionsmittelmenge steigt mit der Brennstoffmenge und hängt dementsprechend von der Last ab. Der Beginn der Einspritzung hängt in erster Linie von der Motordrehzahl und ebenfalls auch von der Last ab. Mit steigender Drehzahl wird der Beginn der Reduktionsmitteleinspritzung vorverlegt, um genügend Zeit für die erwünschte Reaktion zur Verfügung zu stellen. Der Beginn der Einspritzung des Reduktionsmittels darf jedoch nicht so früh liegen, daß das Reduktionsmittel noch verbrennt. Im Einzelfall ist daher eine Optimierung durch Ermittlung geeigneter Kennlinien durchzuführen.

Zur Umsetzung derartiger Kennlinien in den praktischen Betrieb kann eine Regeleinrichtung 13 vorgesehen sein, die einen Regler 14 enthält, in den die Kennlinien einprogrammiert sind, und durch die Einrichtungen zur Veränderung der Einspritzmenge und des Beginns der Einspritzung steuerbar sind. Einrichtungen dieser Art sind von Brennstoffeinspritzpumpen her an sich bekannt. Zur Veränderung des Einspritzbeginns wird die Nockenwelle 12 verstellt. Zur Veränderung der Einspritzmenge wird der mit umfangsseitigen Steuerkanten versehene Kolben der Einspritzpumpe verdreht, wie durch die Einrichtung 15 angedeutet ist.

Bei der Anordnung gemäß Figur 1 ist eine im Bereich des äußeren Brennraumrands angeordnete Reduktionsmittel-Einspritzdüse 9 vorgesehen. Es wäre aber auch ohne weiteres denkbar, zusätzlich oder alternativ hierzu eine zentral angeordnete Reduktionsmittel-Einspritzdüse vorzusehen.

Eine derartige Reduktionsmittel-Einspritzdüse kann mit der Brennstoff-Einspritzdüse zu einer Doppeldüse 16 der der Figur 2 zugrundeliegenden Art zusammengebaut werden. Die der Figur 2 zugrundeliegende Doppeldüse 16 enthält zwei Düsennadeln 17, 18, von denen jede einen jeweils zugeordneten Einspritzkanal 19 bzw. 20 steuert, von denen einer, hier der links gezeichnete Einspritzkanal 19, mit Reduktionsmittel und der andere, hier der rechts gezeichnete Einspritzkanal 20, mit Brennstoff beaufschlagbar sind. Die hier nebeneinander angeordneten Einspritzkanäle 19, 20 und die zugeordneten Düsennadeln 17, 18 könnten auch koaxial zueinander angeordnet sein. Es ist lediglich sicherzustellen, daß beide Einspritzsysteme völlig unabhängig voneinander sind. Der dem Reduktionsmittel zugeordnete Einspritzkanal 19 mündet in Form mehrerer Düsenbohrungen 21 in den Brennraum aus, was die oben schon erwähnte, gleichmäßige Verteilung begünstigen soll. Eine ähnliche Mehrloch-Anordnung kann auch auf der Brennstoffseite vorgesehen sein.

Selbstverständlich ist es ohne weiteres möglich, das erfindungsgemäße Verfahren nicht nur in Verbindung mit Dieselmotoren, sondern auch in Verbindung mit Gasmotoren sowie Diesel-Gas-Motoren und Motoren für alternative Brennstoffe, anzuwenden.

## Patentansprüche

1. Verfahren zur Verminderung des Stickoxidausstoßes von selbstzündenden, mit Luftüberschuß betriebenen Verbrennungsmotoren, vorzugsweise in Form von Dieselmotoren, bei dem ein nicht-kohlenwasserstoffhaltiges Reduktionsmittel, vorzugsweise in Form von Amoniak und/oder Harnstoff in einer Lösung direkt und unabhängig vom Brennstoff in den Brennraum eingespritzt wird, nachdem die Verbrennung des Brennstoffes ihren Höhepunkt bereits überschritten hat, wobei das Reduktionsmittel bei der Einspritzung zerstäubt und gleichmäßig auf den bei der Einspritzung vorhandenen Brennraum verteilt wird,
**dadurch gekennzeichnet**, daß die Einspritzung des Reduktionsmittels in die ausklingende Verbrennung zwischen einem Kurbelwinkel von 35° und 40° nach Zünd-OT beginnt, die Menge des eingespritzten Reduktionsmittels der Motorleistung angepaßt wird und der Beginn der Einspritzung des Reduktionsmittels in Abhängigkeit von der Last und/oder der Drehzahl und/oder Umgebungsbedingungen optimiert wird.

2. Verfahren nach Anspruch 1, dadurch gekezeichnet, daß das Reduktionsmittel in Form einer wässrigen Lösung eingespritzt wird.

3. Verfahren nach einem der vorhergehenden Ansprüche, dadurch gekennzeichnet, daß dem Reduktionsmittel ein Additiv mit schmierenden und/oder korossionsverhindernden Eigenschaften zugesetzt wird.

4. Verfahren nach einem der vorhergehenden Ansprüche, dadurch gekennzeichnet, daß die Einspritzung des Reduktionsmittels mit Zerstäubungsdruck erfolgt.

5. Vorrichtung zur Durchführung des Verfahrens nach einem der vorhergehenden Ansprüche, bei einem selbstzündenden mit Luftüberschuß betriebenen Verbrennungsmotor, vorzugsweise bei einem Dieselmotor, mit einer mit einem einspritzbaren Reduktionsmittel beaufschlagbaren Einspritzeinrichtung, die wenigstens eine in den Brennraum (4) mündende Einspritzdüse (9) und eine hiermit über eine Hochdruckleitung (10) verbundene, im Takt des Motors arbeitende Druckerzeugungseinrichtung aufweist, die Einspritzdüse bzw. - Düsen (9) im Zylinderdeckel angeordnet ist bzw. sind, und eine Strahllage aufweisen, die den bei der Einspritzung vorhandenen Brennraum (4) vollständig erfaßt und der Einspritzeinrichtung für Reduktionsmittel eine Regeleinrichtung (13) zugeordnet ist, die einen Regler (14) enthält, **dadurch gekennzeichnet**, daß in den Regler (14) geeignete Kennlinien einprogrammiert sind, mittels welcher die Einpritzmenge und der Beginn der Einspritzung des Reduktionsmittels zwischen einem Kurbelwinkel von 35° und 40° nach Zünd-OT in Abhängigkeit von einer Änderung der Last und/oder der Drehzahl und/oder von Umgebungsbedingungen veränderbar ist bzw. sind.

6. Vorrichtung nach Anspruch 5, dadurch gekennzeichnet, daß die Druckerzeugungseinrichtung als Einspritzpumpe (11) ausgebildet ist.

7. Vorrichtung nach einem der vorhergehenden Ansprüche 5 oder 6, dadurch gekennzeichnet, daß die Einspritzdüse bzw. -Düsen (9) als Mehrlochdüse bzw. -Düsen ausgebildet ist bzw. sind.

8. Vorrichtung nach einem der vorhergehenden Ansprüche 5 bis 6, dadurch gekennzeichnet, daß wenigstens eine zentral angeordnete Einspritzdüse (16) vorgesehen ist, die zwei Düsennadeln (17, 18) aufweist, von denen eine dem Brennstoffeinspritzsystem und eine dem Reduktionsmitteleinspritzsystem zugeordnet ist.

## Claims

1. Method for reducing the nitrogen oxide emissions from compression-ignition internal combustion engines operated with excess air, preferably in the form of diesel engines, in which a reducing agent which does not contain hydrocarbons and is preferably in the form of ammonia and/or urea in a solution is injected into the combustion chamber directly and independently of the fuel after the combustion of the fuel has already passed its high point, the reducing agent being atomized during injection and being distributed uniformly over the combustion chamber which is present during injection, characterized in that the injection of the reducing agent into the finishing combustion begins between a crank angle of 35° and 40° after ignition TDC, the amount of reducing agent injected is adapted to the engine power, and the beginning of injection of the reducing agent is optimized as a function of the load and/or the speed and/or ambient conditions.

2. Process according to claim 1, characterised in that the reducing agent is injected in the form of an aqueous solution.

3. Process according to one of the preceding claims, characterised in that an additive with lubricating and/or corrosion-preventing properties is added to the reducing agent.

4. Process according to one of the preceding claims, characterised in that injection of the reducing agent is effected with atomisation pressure.

5. Device for carrying out the method according to one of the preceding claims, in a compression-ignition internal combustion engine operated with excess air, preferably in a diesel engine, having an injection device which can be supplied with an injectable reducing agent and has at least one injection nozzle (9) opening out into the combustion chamber (4) and a pressure-generating device which is connected thereto via a high-pressure line (10) and operates during the engine cycle, the injection nozzle or nozzles (9) is/are arranged in the cylinder cover and have a jet position which completely covers the combustion chamber (4) which is present during injection, and the injection device for reducing agent is assigned a control device (13) which contains a control unit (14), characterized in that suitable characteristic curves are programmed into the control unit (14), by means of which characteristic curves the injection quantity and the beginning of injection of the reducing agent can be varied between a crank angle of 35° and 40° after ignition TDC as a function of a change in the load and/or the speed and/or of ambient conditions.

6. Device according to claim 5, characterised in that the pressure generation device is designed as an injection pump (11).

7. Device according to one of the preceding claims 5 or 6, characterised in that the injection nozzle or nozzles (9) is or are designed as a multi-aperture nozzle or nozzles.

8. Device according to one of the preceding claims 5 to 6, characterised in that at least one centrally arranged injection nozzle (16) is provided which has two nozzle needles (17, 18), one of which is assigned to the fuel injection system and one to the reducing agent injection system.

## Revendications

1. Procédé de réduction de l'émission d'oxyde d'azote de moteurs à combustion interne à auto-allumage fonctionnant avec excès d'air, de préférence sous forme de moteurs Diesel, selon lequel un agent réducteur exempt d'hydrocarbures, de préférence sous forme d'ammoniac et/ou d'urée dans une solution, est injecté directement et indépendamment du combustible ou carburant dans la chambre de combustion, après que la combustion du carburant ait déjà dépassé son maximum, l'agent réducteur étant pulvérisé lors de l'injection et réparti uniformément sur l'espace de la chambre de combustion disponible lors de l'injection, caractérisé on ce que l'injection de l'agent réducteur dans la combustion qui s'achève, débute ente un angle de vilebrequin de 35° et 40° après le point mort haut d'allumage, en ce que l'on adapte la quantité de l'agent réducteur injecté à la puissance du moteur, et en ce que l'on optimise le début de l'injection de l'agent réducteur on fonction de la charge et/ou de la vitesse de rotation et/ou de conditions environnantes.

2. Procédé selon la revendication 1, caractérisé en ce que l'agent réducteur est injecté sous la forme d'une solution aqueuse.

3. Procédé selon l'une des revendications précédentes, caractérisé en ce qu'un additif présentant des propriétés lubrifiantes et/ou empêchant la corrosion est ajouté à l'agent réducteur.

4. Procédé selon l'une des revendications précédentes, caractérisé en ce que l'injection de l'agent réducteur s'effectue avec une pression de pulvérisation.

5. Dispositif pour la mise on oeuvre du procédé selon l'une des revendications précédentes, dans un moteur à combustion interne à auto-allumage fonctionnant avec excès d'air, de préférence dans un moteur Diesel, le dispositif comprenant un système d'injection alimenté par un agent réducteur pouvant être injecté, ce système d'injection comportant au moins un injecteur (9) débouchant dans la chambre de combustion (4), et, relié à celui-ci ou ceux-ci par l'intermédiaire d'une conduite haute pression (10), un dispositif de production de pression fonctionnant selon le cycle du moteur, l'injecteur ou les injecteurs (9) étant disposé(s) dans la culasse et présentant une position de pulvérisation permettant de couvrir totalement l'espace de la chambre de combustion (4) disponible lors de l'injection, et un dispositif de régulation (13) incluant un régulateur (14) étant associé au système d'injection pour l'agent réducteur, caractérisé en ce que dans le régulateur (14) ont été programmées des courbes caractéristiques appropriées, à l'aide desquelles la quantité injectée et le début de l'injection de l'agent réducteur entre un angle de vilebrequin de 35° et 40° après le point mort haut d'allumage, peut ou peuvent être modifiés en fonction d'une variation de la charge et/ou de la vitesse de rotation et/ou de conditions environnantes.

6. Dispositif selon la revendication 5, caractérisé en ce que le dispositif de production de pression est réalisé sous la forme d'une pompe d'injection (11).

7. Dispositif selon l'une des revendications précédentes 5 ou 6, caractérisé par le fait que le ou les injecteurs (9) sont réalisés sous la forme d'injecteur(s) à plusieurs trous.

8. Dispositif selon l'une des revendications précédentes 5 et 6, caractérisé par le fait qu'il est prévu au moins un injecteur (16) disposé d'une manière centrale, qui possède deux aiguilles d'injecteur (17 et 18), dont l'une est associée au système d'injection de carburant et dont l'autre est associée au système d'injection de l'agent réducteur.
